# EUROPEAN PATENT SPECIFICATION

(11) **EP 3 021 336 B1**
(45) Date of publication and mention of the grant of the patent: **27.06.2018**
(21) Application number: 15194319.8
(22) Date of filing: 12.11.2015
(51) Int. Cl.: H01F 38/14, H04B 5/00

(54) **SOFT MAGNETIC ALLOY AND SHIELDING SHEET FOR ANTENNA COMPRISING THE SAME**
WEICHMAGNETISCHE LEGIERUNG UND ABSCHIRMBLECH FÜR ANTENNE DAMIT
ALLIAGE MAGNÉTIQUE DOUX ET FEUILLE DE PROTECTION POUR ANTENNE COMPRENANT CELUI-CI

(30) Priority: 13.11.2014 KR 20140158271
(43) Date of publication of application: 18.05.2016
(73) Proprietor: LG Innotek Co., Ltd., Seoul, 04637 (KR)
(72) Inventor: BAE, Seok, 04637 SEOUL (KR); SONG, Ji Yeon, 04637 SEOUL (KR); MOON, Won Ha, 04637 SEOUL (KR); LEE, Sang Won, 04637 SEOUL (KR); LEE, Jong Hyuk, 04637 SEOUL (KR); HYUN, Soon Young, 04637 SEOUL (KR)
(74) Representative: Novagraaf Technologies

(56) References cited:
- KR-A- 20140 108 946
- US-A1- 2007 221 297
- US-A1- 2014 176 281

## Description

### BACKGROUND

### 1. Field of the Invention

The present invention relates to a soft magnetic alloy, and more particularly, to a soft magnetic alloy included in a shielding sheet for an antenna.

### 2. Discussion of Related Art

Antenna modules of wireless power transceiving apparatuses for wireless charging or antenna modules of radio frequency identification (RFID) tags include antenna coils and shielding sheets. The shielding sheets include a magnetic material, for example a ferrite, a high permeability amorphous material, an Fe-Si-Al alloy, an Fe-Si-Cr alloy, etc, and can increase an inductance of an antenna coil and increase a communication distance. In particular, the Fe-Si-Cr alloy has a low loss coefficient so that the Fe-Si-Cr alloy is not only applied to an RFID antenna module using a frequency of 13.56 MHz but an antenna module using a frequency of 100 kHz for wireless charging.

As disclosed in documents US 2007/221297, KR 2014/0108946 and US 2014/176281, the Fe-Si-Cr alloy generally used for a shielding sheet has a composition of Fe_{bal}.Si_{12at%}Cr_{1.5at%}. The Fe-Si-Cr alloy having the composition has poor corrosion resistance, and a brittle characteristic when the alloy in a plate shape is processed. Further, in order to increase the corrosion resistance of the Fe-Si-Cr alloy, a phosphate treatment can be performed but, after that, there is a problem that a saturation magnetic flux density is abruptly decreased.

### SUMMARY OF THE INVENTION

The present invention provides a soft magnetic alloy included in a shielding sheet for an antenna.

A soft magnetic alloy according to the present invention has a composition of the following Chemical Formula:

[Chemical Formula] Fe_{100-a-b}SiₐCr_{b}

where, a+b is in the range of 10.5 to 18 at%.
a is in the range of 1 to 5 at% and b is in the range of 11 to 17 at%.

A saturation magnetic flux density may be in a range of 1.4 to 1.9 T and, a resistivity may be equal to or more than 60 µΩ.cm.

The soft magnetic alloy may include a plate-shaped powder having a particle diameter of 30 to 120 µm and a thickness of 0.3 to 1.5 µm.

A shielding sheet for an antenna according to the present invention has the composition of Chemical Formula.

The shielding sheet for an antenna may further include a binder.

The binder may be selected from the group consisting of a thermoplastic resin, a thermosetting resin, an ultraviolet curable resin, and a radiation curable resin.

A wireless power transmitter of a wireless charging system according to the present invention includes a soft magnetic core and a transmitter coil formed on the soft magnetic core. The soft magnetic core includes a soft magnetic alloy having the composition of the above Chemical Formula.

A wireless power receiver of a wireless charging system according to the present invention includes a soft magnetic sheet and a receiver coil formed on the soft magnetic sheet. The soft magnetic sheet includes a soft magnetic alloy having the composition of the above Chemical Formula.

### BRIEF DESCRIPTION OF THE DRAWINGS

The above and other objects, features and advantages of the present invention will become more apparent to those of ordinary skill in the art by describing in detail embodiments thereof with reference to the accompanying drawings, in which:
FIG. 1 shows a wireless charging system according to the present invention;
FIG. 2 is a view illustrating a method of transceiving wireless power in a wireless charging system according to the present invention;
FIG. 3 is a view illustrating a part of a wireless power transmitter according to the present invention;
FIG. 4 is a view illustrating a part of the wireless power receiver according to the present invention;
FIG. 5 shows spherical powder of a soft magnetic alloy manufactured according to the present invention;
FIG. 6 shows flakes of a soft magnetic alloy manufactured according to the present invention; and
FIGS. 7 to 12 show a corrosion resistance of a soft magnetic alloy according to Examples and FIGS. 13 to 15 show a corrosion resistance of a soft magnetic alloy according to Comparative Examples.

### DETAILED DESCRIPTION OF EXEMPLARY EMBODIMENTS

While the invention is susceptible to various modifications and alternative embodiments, specific embodiments thereof are shown by way of example in the drawings and will be described..

It will be understood that, although the terms including ordinal numbers such as "first," "second," etc. may be used herein to describe various elements, these elements are not limited by these terms. These terms are only used to distinguish one element from another. For example, a second element could be termed a first element without departing from the teachings of the present inventive concept, and similarly a first element could be also termed a second element. The term "and/or" includes any and all combination of one or more of the associated listed items.

It will be understood that when an element or layer is referred to as being "on," "connected to," or "coupled with" another element or layer, it can be directly on, connected, or coupled to the other element or a layer or intervening elements or layers may be present. In contrast, when an element is referred to as being "directly on," "directly connected to," or "directly coupled with" another element or layer, there are no intervening elements or layers present.

The terminology used herein is for the purpose of describing particular embodiments only and is not intended to be limiting of the present inventive concept. As used herein, the singular forms "a," "an," and "the," are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, the present invention will be described in detail with reference to the accompanying drawings, and regardless of numbers in the drawings, the same or corresponding elements will be assigned with the same numbers and overlapping descriptions will be omitted.

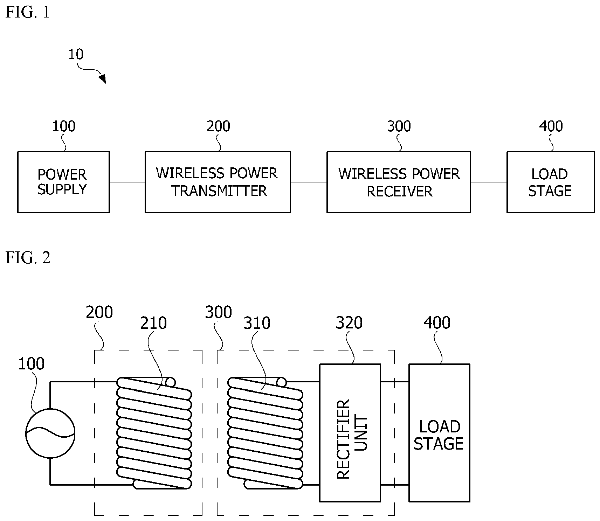

FIG. 1 shows a wireless charging system according to the present invention.

Referring to FIG. 1, a wireless charging system 10 may include a power supply 100, a wireless power transmitter 200, a wireless power receiver 300, and a load stage 400.

The wireless power transmitter 200 is connected to the power supply 100 and receives power from the power supply 100. Further, the wireless power transmitter 200 wirelessly transmits power to the wireless power receiver 300. Here, the wireless power transmitter 200 may transmit the power using an electromagnetic induction or resonance method. The power supply 100 and the wireless power transmitter 200 are exemplarily shown to be separate, but are not limited thereto. The power supply 100 may also be included in the wireless power transmitter 200.

The wireless power receiver 300 wirelessly receives power from the wireless power transmitter 200. The wireless power receiver 300 also receives power using the electromagnetic induction or resonance method, and the wireless power receiver 300 supplies the load stage 400 with the received power. The load stage 400 may be a battery or a unit in which a battery is embedded. The load stage 400 and the wireless power receiver 300 are exemplarily shown to be separate, but are not limited thereto. The load stage 400 may be included in the wireless power receiver 300.

FIG. 2 is a view illustrating a method of transceiving wireless power in a wireless charging system according to the present invention.

Referring to FIG. 2, a wireless power transmitter 200 may include a transmitter coil 210. A wireless power receiver 300 may include a receiver coil 310 and a rectifier unit 320.

A power supply 100 generates alternating current power having a specific frequency and provides the transmitter coil 210 of the wireless power transmitter 200 with the alternating current power.

The alternating current generated by the transmitter coil 210 may be transmitted to the receiver coil 310 inductively coupled with the transmitter coil 210. The power provided to the transmitter coil 210 may be transmitted by a frequency resonance method to the wireless power receiver 300 having the same resonance frequency as the wireless power transmitter 200. Power may be transmitted between two LC circuits which have matched impedance by resonance.

Power transmitted to the receiver coil 310 using an electromagnetic induction or resonance method is rectified through the rectifier unit 320 and delivered to a load stage 400.

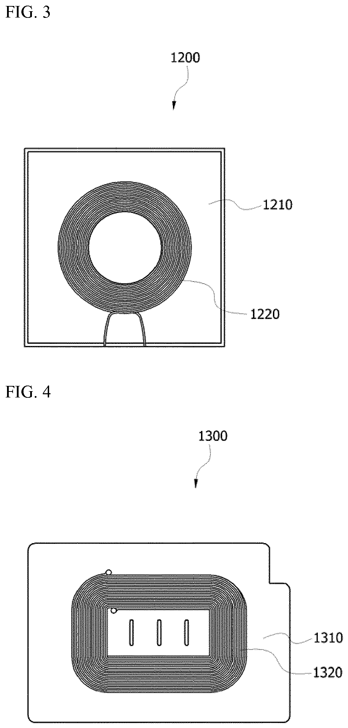

FIG. 3 is a view illustrating a part of a wireless power transmitter according to the present invention. FIG. 4 is a view illustrating a part of the wireless power receiver according to the present invention.

Referring to FIG. 3, a wireless power transmitter 1200 may include a soft magnetic core 1210 and a transmitter coil 1220.

The soft magnetic core 1210 may be made of a soft magnetic material having a thickness of several millimeters. The transmitter coil 1220 may be disposed on the soft magnetic core 1210. Although not shown, a permanent magnet is additionally disposed on the soft magnetic core 1210 and the permanent magnet may be enclosed by the transmitter coil 1220.

Referring to FIG. 4, a wireless power receiver 1300 includes a soft magnetic substrate 1310 and a receiver coil 1320 and the receiver coil 1320 may be disposed on the soft magnetic substrate 1310.

The receiver coil 1320 may be provided to have a coil surface in which the coil is wound in a direction parallel to the soft magnetic substrate 1310 on the soft magnetic substrate 1310.

Although not shown, when the wireless power receiver 1300 simultaneously has a wireless charging function and a near field communication (NFC) function, an NFC coil is additionally stacked on the soft magnetic substrate 1310. The NFC coil may be formed to enclose an outer surface of the receiver coil 1320.

According to an example of the present invention, at least one of the soft magnetic core of the wireless power transmitter and the soft magnetic substrate of the wireless power receiver includes a soft magnetic alloy having a composition of the following Chemical Formula 1:

[Chemical Formula 1] Fe_{100-a-b}SiₐCr_{b}

where a+b is in a range of 10.5 to 18 at%.

Therefore, a soft magnetic alloy which has a good corrosion resistance, a high saturation magnetic flux density, a high resistivity, and a high permeability in a surface direction may be provided.

Here, Si serves to increase electric resistance, to decrease loss caused by an over current, and to increase permeability. Further, Si serves to suppress a change in a magnetic characteristic based on an environment and to reinforce strength against an impact. When the above described Si content is less than 1 at%, resistivity may be decreased, strength may be weakened, and oxidation resistance may be lowered. Even when a Si content is more than 5 at%, since it is difficult to form a wide and thin flake due to a brittle characteristic, an occurrence of surface defects increases and a permeability in a surface direction is lowered.

Cr concurrently serves as a growth inhibitor, increases electric resistance, and raises corrosion resistance by forming an oxide film on a soft magnetic alloy. For example, Cr may prevent corrosion generated in a process of manufacturing or curing the soft magnetic alloy including Fe. That is, Cr forms a Cr₂O₃ film on the soft magnetic alloy in an initial corrosion state. Since the Cr₂O₃ film is formed to be thin and dense, an additional corrosion of Fe may be prevented or delayed. Therefore, when a Cr content is less than 11 at%, since Cr conversely becomes a seed of corrosion, corrosion resistance of the soft magnetic alloy may be worsened. When a Cr content is more than 17 at%, formability and a saturation magnetic flux density may be lowered.

Meanwhile, the Si and Cr content is in a range of 10.5 to 18 at% of the soft magnetic alloy, that is, Fe may be included in a range of 82 to 89.5 at% of the overall soft magnetic alloy. When an Fe content is less than 82 at%, since a saturation magnetic flux density is decreased, it is difficult to form a thinned shielding sheet. When the Fe content is more than 89.5 at%, since glass formability is low, a crystal phase may exist.

In order to produce the soft magnetic alloy according to the present invention, a metal powder having a composition of Chemical Formula 1 may be mixed, melted at a range of 1500 °C to 1900 °C, cooled to room temperature using a water quenching or melt spinner method, and produced to be spherical powder using a gas atomizer. After that, the spherical powder may be annealed through a thermal treatment process at a range of 300 to 500 °C and be formed to be plate-shaped flakes.

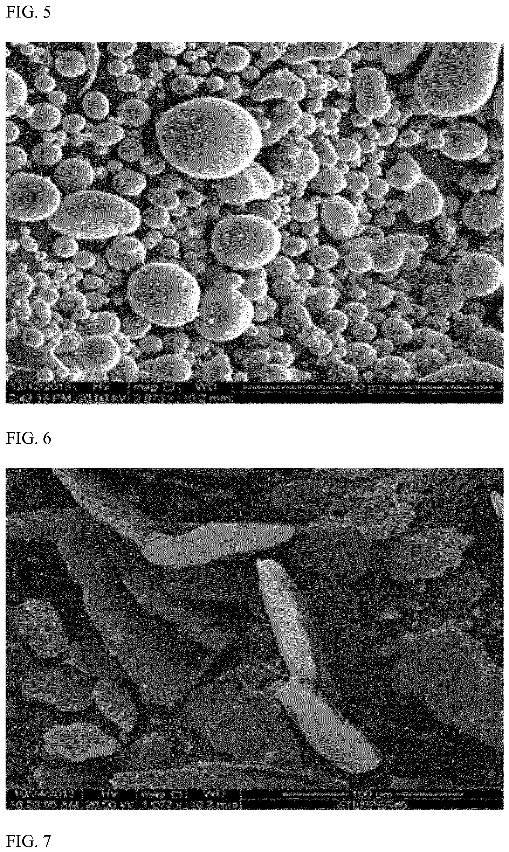

FIG. 5 shows spherical powder of a soft magnetic alloy manufactured according to the present invention. FIG. 6 shows flakes of a soft magnetic alloy manufactured according to the present invention. In the flakes of the soft magnetic alloy according to the present invention, a particle diameter of the flake is in a range of 30 to 120 µm and a thickness thereof is in a range of 0.3 to 1.5 µm. When a Si content in a soft magnetic alloy is less than 5 at%, since formability of the soft magnetic alloy is increased, flakes having a particle diameter of more than 30 µm and preferably in a range of 30 to 120 µm may be provided. Therefore, a permeability in a surface direction and resistivity may also be raised.

The soft magnetic alloy formed in a flake shape according to the present invention may be applied as a shielding sheet for an antenna. The shielding sheet for an antenna according to the present invention may include the soft magnetic alloy according to the present invention and a binder. The shielding sheet for an antenna according to the present invention may include a soft magnetic alloy having a content of 60 to 95 wt% and a binder having a content of 5 to 40 wt%. When the soft magnetic alloy according to the present invention and the binder are mixed based on a weight ratio thereof and the mixture is pressed at a high temperature, the shielding sheet for an antenna according to the present invention may be manufactured. Here, the binder may include a thermoplastic resin, a thermosetting resin, an ultraviolet curable resin, a radiation curable resin, etc. For example, the binder may be selected from the group consisting of an epoxy resin, a silicone resin, a silicone rubber, a phenol resin, a urea resin, a melamine resin, and a poly vinyl alcohol (PVA) resin. When a shielding sheet for an antenna has a soft magnetic alloy content according to the present invention of less than 60 wt%, a saturation magnetic flux density thereof may be decreased and when the soft magnetic alloy content is more than 95 wt%, since a coupling force between flakes may be decreased, the shielding sheet for an antenna may be more brittle.

Hereinafter, the soft magnetic alloy will be described in more detail using Examples and Comparative Examples.

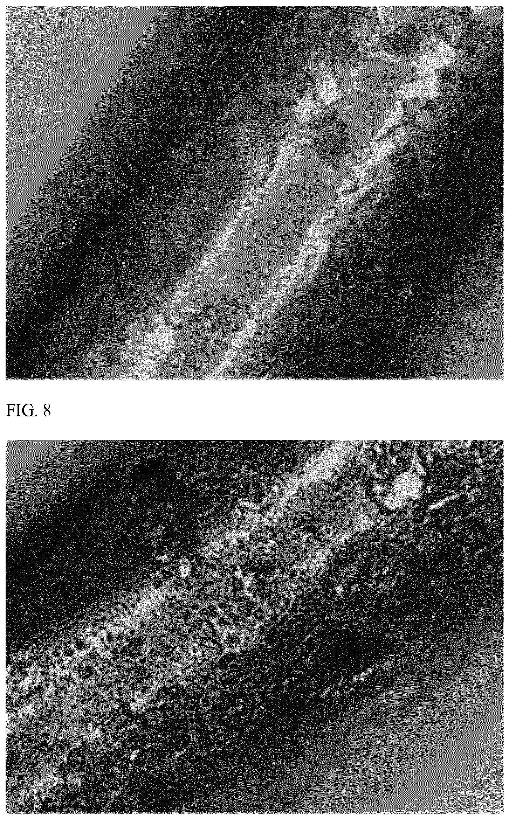

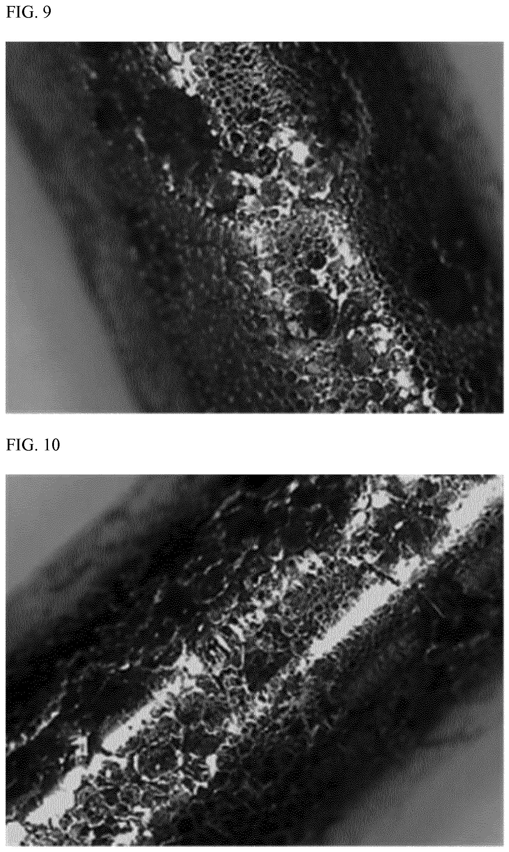

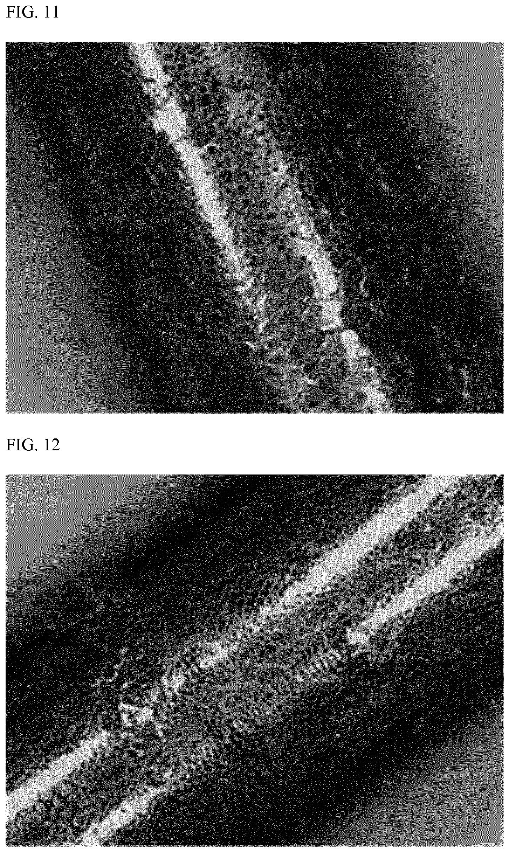

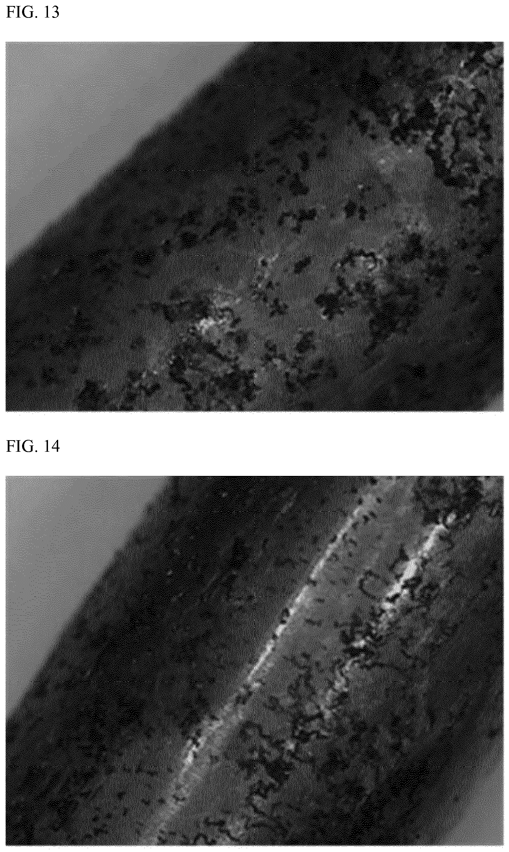

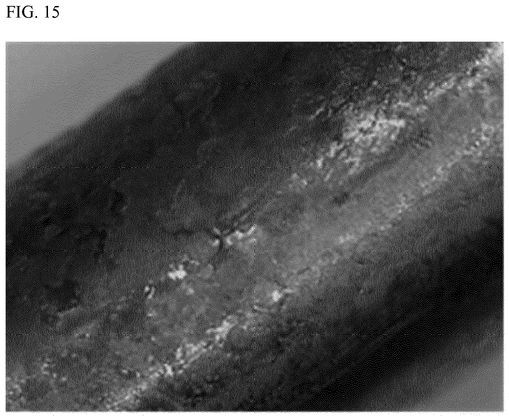

Table 1 shows a composition of a soft magnetic alloy, a saturation magnetic flux density (T), a resistivity (µΩ•cm), and a corrosion resistance according to Examples. Table 2 shows a composition of a soft magnetic alloy, a saturation magnetic flux density (T), a resistivity (µΩ•cm), and a corrosion resistance according to Comparative Examples. FIGS. 7 to 12 show corrosion resistance of Examples 1 to 6, (examples 1 to 3 are outside the scope of the invention) and FIGS. 13 to 15 show corrosion resistance of Comparative Examples 1 to 3.

In order to produce soft magnetic alloys according to Examples and Comparative Examples , a metal powder based on each composition in Table 1 was melted at 1700 °C, cooled to room temperature using a water quenching method and produced to be spherical powder using a gas atomizer. The spherical powder was thermally treated at 350 °C and manufactured to be flakes.

In flakes of the soft magnetic alloy manufactured according to Examples and Comparative Examples, a saturation magnetic flux density (T) was measured using a vibrating sample magnetometer (VSM) and a resistivity (µΩ•cm) was measured using a point probe. After the soft magnetic alloy manufactured according to Examples and Comparative Examples was soaked for 48 hours in salt water containing NaCl at 5 wt%, a corrosion resistance was measured by observing a degree of corrosion.

**Table 1 (examples 1 to 3 are outside the scope of the invention)**

| Number of experiment | Composition (at.%) | Saturation magnetic flux density (T) | Resistivity (µΩ·cm) | Corrosion resistance |
|---|---|---|---|---|
| Example 1 | Fe_{bal.}Si₇Cr_{3.5} | 1.86 | 80.7 | Pass |
| Example 2 | Fe_{bal.}Si_{6.5}Cr₄ | 1.85 | 62.4 | Pass |
| Example 3 | Fe_{bal.}Si₆Cr₈ | 1.71 | 70.5 | Pass |
| Example 4 | Fe_{bal.}Si₅Cr₁₁ | 1.63 | 72.8 | Pass (excellent) |
| Example 5 | Fe_{bal.}Si₃Cr₁₄ | 1.51 | 70.2 | Pass (excellent) |
| Example 6 | Fe_{bal.}Si₁Cr₁₇ | 1.42 | 65.2 | Pass (excellent) |

**Table 2**

| Number of experiment | Composition (at.%) | Saturation magnetic flux density (T) | Resistivity (µΩ·cm) | Corrosion resistance |
|---|---|---|---|---|
| Comparative Example 1 | Fe_{bal.}Si₁₀Cr_{1.5} | 1.78 | 69.6 | Inferior |
| Comparative Example 2 | Fe_{bal.}Si_{0.5}Cr₂ | 1.91 | 22.8 | Inferior |
| Comparative Example 3 | Fe_{bal.}Si₇Cr_{2.5} | 1.88 | 68.2 | Inferior |
| Comparative Example 4 | Fe_{bal.}Si_{0.5}Cr₁₈ | 1.31 | 60.2 | Pass |
| Comparative Example 5 | Fe_{bal.}Si₄Cr₂₀ | 1.19 | 75.7 | Pass |

Referring to Tables 1 and 2 and FIGS. 7 to 15, in the soft magnetic alloy of Examples 1 to 6 (examples 1 to 3 are outside the scope of the invention) including a Si content of 1 to 7 at%, a Cr content of 3.5 to 17 at%, and a Si and Cr content of 10.5 to 18 at%, a saturation magnetic flux density and a resistivity are high and a corrosion resistance is good, but, in the soft magnetic alloy of Comparative Examples 1 to 5 exceeding the range of the above values, it can be seen that at least one of a saturation magnetic flux density, a resistivity and a corrosion resistance is not good.

Specifically, in the soft magnetic alloy of Examples 1 to 6, (examples 1 to 3 are outside the scope of the invention) a saturation magnetic flux density is in a range of 1.4 to 1.9 T and a resistivity is more than 60 µΩ.cm.

Further, in Examples 1 to 4 (examples 1 to 3 are outside the scope of the invention) including a Si content of 5 to 7 at%, a Cr content of 3.5 to 11 at%, and a Si and Cr content of 10.5 to 16 at%, a soft magnetic alloy in which a saturation magnetic flux density is more than 1.6 T may be provided. When a saturation magnetic flux density is more than 1.6 T, since a thin shielding sheet is provided, a thin wireless power transceiver may be obtained.

Meanwhile, in Examples 4 to 6 including a Si content of 1 to 5 at% and a Cr content of 11 to 17 at%, a soft magnetic alloy in which corrosion resistance is especially excellent may be provided.

For convenience of description, examples of the soft magnetic core of the wireless power transmitter or the soft magnetic sheet of the wireless power receiver are described. The soft magnetic alloy according to the present invention can be applied to various sheets for shielding an electromagnetic field. For example, the soft magnetic alloy according to the present invention can be applied to a shielding sheet for a radio frequency identification (RFID) antenna.

In addition, the soft magnetic alloy according to the present invention can be applied to a soft magnetic core of a transformer, a soft magnetic core of a motor, or a magnetic core of an inductor. For example, the soft magnetic alloy according to the present invention can be applied to a magnetic core wound with a coil or a magnetic core which accommodates a wound coil.

Furthermore, the soft magnetic alloy according to the present invention can be variously applied to a green vehicle, a high performance electronic device, and the like.

According to the present invention, the soft magnetic alloy not only applied to an RFID tag but a wireless power transceiving apparatus, and a shielding sheet including the soft magnetic alloy is provided. In particular, the soft magnetic alloy and the shielding sheet according to the present invention have good corrosion resistance, a high saturation magnetic flux density, high resistivity, and a high permeability in a surface direction.

## Claims

1. A soft magnetic alloy having a composition of the following Chemical Formula:
Fe_{100-a-b}SiₐCr_{b}
where a+b is in the range of 10.5 to 18 at%,
**characterized in that**,
a is in the range of 1 to 5 at% and b is in the range of 11 to 17 at%.

2. The soft magnetic alloy of claim 1, wherein a saturation magnetic flux density is in a range of 1.4 to 1.9 T and, resistivity is equal to or more than 60 µΩ.cm.

3. The soft magnetic alloy of claim 2, wherein a saturation magnetic flux density is in a range of 1.6 T to 1.9 T.

4. The soft magnetic alloy of claim 1, comprising a plate-shaped powder having a particle diameter of 30 to 120 µm and a thickness of 0.3 to 1.5 µm.

5. A shielding sheet for an antenna comprising a soft magnetic alloy having a composition of the following Chemical Formula:
Fe_{100-a-b}SiₐCr_{b}
where a+b is in the range of 10.5 to 18 at%,
**characterized in that**,
a is in the range of 1 to 5 at% and b is in the range of 11 to 17 at%.

6. The shielding sheet of claim 5, wherein a saturation magnetic flux density is in a range of 1.4 to 1.9 T and resistivity is equal to or more than 60 µΩ.cm.

7. The shielding sheet of claim 5, further comprising a binder.

8. The shielding sheet of claim 7, wherein the binder is selected from the group consisting of a thermoplastic resin, a thermosetting resin, an ultraviolet curable resin, and a radiation curable resin.

9. The shielding sheet of claim 7, wherein the binder is selected from the group consisting of an epoxy resin, a silicone resin, a silicone rubber, a phenol resin, a urea resin, a melamine resin, and a poly vinyl alcohol (PVA) resin.

10. A wireless power transmitter (200 ; 1200) of a wireless charging system (10), comprising:
a soft magnetic core (1210); and
a transmitter coil (210 ; 1220) formed on the soft magnetic core (1210),
wherein the soft magnetic core (1210) includes a soft magnetic alloy having a composition of the following Chemical Formula:
Fe_{100-a-b}SiₐCr_{b}
where a+b is in the range of 10.5 to 18 at%
**characterized in that**,
a is in the range of 1 to 5 at% and b is in the range of 11 to 17 at%.

11. A wireless power receiver (300 ; 1300) of a wireless charging system (10), comprising:
a soft magnetic sheet; and
a receiver coil (310 ; 1320) formed on the soft magnetic sheet,
wherein the soft magnetic sheet includes a soft magnetic alloy having a composition of the following Chemical Formula:
Fe_{100-a-b}SiₐCr_{b}
where and a+b is in the range of 10.5 to 18 at%
**characterized in that**,
a is in the range of 1 to 5 at% and b is in the range of 11 to 17 at%.

## Patentansprüche

1. Weichmagnetische Legierung, die eine Zusammensetzung der folgenden chemischen Formel aufweist:
Fe_{100-a-b}SiₐCr_{b}
worin a+b im Bereich von 10,5 bis 18 Atom-% beträgt,
**dadurch gekennzeichnet, dass**
a im Bereich von 1 bis 5 Atom-% beträgt und b im Bereich von 11 bis 17 Atom-% beträgt.

2. Weichmagnetische Legierung nach Anspruch 1, wobei eine magnetische Sättigungsflussdichte in einem Bereich von 1,4 bis 1,9 T beträgt und der spezifische Widerstand gleich oder mehr als 60 µΩ.cm beträgt.

3. Weichmagnetische Legierung nach Anspruch 2, wobei eine magnetische Sättigungsflussdichte in einem Bereich von 1,6 bis 1,9 T beträgt.

4. Weichmagnetische Legierung nach Anspruch 1, umfassend ein plättchenförmiges Pulver, das einen Teilchendurchmesser von 30 bis 120 µm und eine -dicke von 0,3 bis 1,5 µm aufweist.

5. Abschirmfolie für eine Antenne, umfassend eine weichmagnetische Legierung, die eine Zusammensetzung der folgenden chemischen Formel aufweist:
Fe_{100-a-b}SiₐCr_{b}
worin a+b im Bereich von 10,5 bis 18 Atom-% beträgt,
**dadurch gekennzeichnet, dass**
a im Bereich von 1 bis 5 Atom-% beträgt und b im Bereich von 11 bis 17 Atom-% beträgt.

6. Abschirmfolie nach Anspruch 5, wobei eine magnetische Sättigungsflussdichte in einem Bereich von 1,4 bis 1,9 T beträgt und der spezifische Widerstand gleich oder mehr als 60 µΩ.cm beträgt.

7. Abschirmfolie nach Anspruch 5, die weiter einen Binder umfasst.

8. Abschirmfolie nach Anspruch 7, wobei der Binder ausgewählt ist aus der Gruppe bestehend aus einem thermoplastischen Harz, einem wärmehärtbarem Harz, einem ultraviolett-härtbaren Harz, und einem strahlungshärtbaren Harz.

9. Abschirmfolie nach Anspruch 7, wobei der Binder ausgewählt ist aus der Gruppe bestehend aus einem Epoxidharz, einem Silikonharz, einem Silikongummi, einem Phenolharz, einem Harnstoffharz, einem Melaminharz, und einem Polyvinylalkohol- (PVA) Harz.

10. Drahtloser Energieübertrager (200; 1200) eines drahtlosen Ladesystems (10), umfassend:
einen weichmagnetischen Kern (1210); und
eine Übertragerspule (210; 1220), die auf dem weichmagnetischen Kern (1210) gebildet ist,
wobei der weichmagnetische Kern (1210) eine weichmagnetische Legierung einschließt, die eine Zusammensetzung der folgenden chemischen Formel aufweist:
Fe_{100-a-b}SiₐCr_{b}
worin a+b im Bereich von 10,5 bis 18 Atom-% beträgt,
**dadurch gekennzeichnet, dass**
a im Bereich von 1 bis 5 Atom-% beträgt und b im Bereich von 11 bis 17 Atom-% beträgt.

11. Drahtloser Energieempfänger (300; 1300) eines drahtlosen Ladesystems (10), umfassend:
eine weichmagnetische Folie; und
eine Empfängerspule (310; 1320), die auf der weichmagnetischen Folie gebildet ist,
wobei die weichmagnetische Folie eine weichmagnetische Legierung einschließt, die eine Zusammensetzung der folgenden chemischen Formel aufweist:
Fe_{100-a-b}SiₐCr_{b}
worin a+b im Bereich von 10,5 bis 18 Atom-% beträgt,
**dadurch gekennzeichnet, dass**
a im Bereich von 1 bis 5 Atom-% beträgt und b im Bereich von 11 bis 17 Atom-% beträgt.

## Revendications

1. Alliage magnétique doux dont la composition est définie par la formule chimique suivante :
Fe_{100-a-b}SiₐCr_{b}
où a+b est compris entre 10,5 et 18 % atomique,
**caractérisé en ce que**,
a est compris entre 1 et 5 % atomique et b est compris entre 11 et 17 % atomique.

2. Alliage magnétique doux selon la revendication 1, présentant une densité de flux magnétique à saturation est comprise entre 1,4 et 1,9 T et une résistivité supérieure ou égale à 60 µΩ.cm.

3. Alliage magnétique doux selon la revendication 2, selon lequel la densité de flux magnétique à saturation est comprise entre 1,6 T et 1,9 T.

4. Alliage magnétique doux selon la revendication 1, comprenant une poudre en forme de plaque ayant un diamètre de particule de 30 à 120 µm et une épaisseur de 0,3 à 1,5 µm.

5. Feuille de protection pour une antenne comprenant un alliage magnétique doux dont la composition est définie par la formule chimique suivante :
Fe_{100-a-b}SiₐCr_{b}
où a+b est compris entre 10,5 et 18 % atomique,
**caractérisée en ce que**,
a est compris entre 1 et 5 % atomique et b est compris entre 11 et 17 % atomique.

6. Feuille de protection selon la revendication 5, présentant une densité de flux magnétique à saturation comprise entre 1,4 et 1,9 T et une résistivité supérieure ou égale à 60 µΩ.cm.

7. Feuille de protection selon la revendication 5, comprenant en outre un liant.

8. Feuille de protection selon la revendication 7, dans laquelle le liant est choisi dans le groupe constitué d'une résine thermoplastique, d'une résine thermodurcissable, d'une résine durcissable aux ultraviolets et d'une résine durcissable aux rayonnements.

9. Feuille de protection selon la revendication 7, dans laquelle le liant est choisi dans le groupe constitué d'une résine époxy, d'une résine de silicone, d'un caoutchouc de silicone, d'une résine de phénol, d'une résine d'urée, d'une résine de mélamine et d'une résine de poly(alcool vinylique) (PVA).

10. Transmetteur de puissance sans fil (200 ; 1200) d'un système de chargement sans fil (10), comprenant :
un noyau magnétique doux (1210) ; et
une bobine d'excitation (210 ; 1220) formée sur le noyau magnétique doux (1210),
dans lequel le noyau magnétique doux (1210) inclut un alliage magnétique doux dont la composition est définie par la formule chimique suivante :
Fe_{100-a-b}SiₐCr_{b}
où a+b est comprise entre 10,5 et 18 % atomique,
**caractérisé en ce que**,
a est compris entre 1 et 5 % atomique et b est compris entre 11 et 17 % atomique.

11. Récepteur de puissance sans fil (300 ; 1300) d'un système de chargement sans fil (10), comprenant :
une feuille magnétique douce ; et
une bobine réceptrice (310 ; 1320) formée sur la feuille magnétique douce,
dans lequel la feuille magnétique douce inclut un alliage magnétique doux dont la composition est définie par la formule chimique suivante :
Fe_{100-a-b}SiₐCr_{b}
où a+b est compris entre 10,5 et 18 % atomique,
**caractérisé en ce que**,
a est compris entre 1 et 5 % atomique et b est compris entre 11 et 17 % atomique.
